# EUROPEAN PATENT SPECIFICATION

(11) **EP 3 950 536 B1**
(45) Date of publication and mention of the grant of the patent: **20.05.2026**
(21) Application number: 19923070.7
(22) Date of filing: 05.04.2019
(51) Int. Cl.: B65D 90/06, F17C 3/02

(54) **LIQUEFIED GAS TANK AND LIQUEFIED GAS CARRIER SHIP**
FLÜSSIGGASTANK UND FLÜSSIGGAS-TANKSCHIFF
RÉSERVOIR DE GAZ LIQUÉFIÉ ET NAVIRE-CITERNE POUR GAZ LIQUÉFIÉ

(43) Date of publication of application: 09.02.2022
(73) Proprietor: Kawasaki Jukogyo Kabushiki Kaisha, Hyogo 650-8670 (JP)
(72) Inventor: KAWAMOTO, Hideki, Hyogo 650-8670 (JP); IMAI, Tatsuya, Hyogo 650-8670 (JP); MASHIRO, Keisuke, Hyogo 650-8670 (JP); OKUMURA, Kentaro, Hyogo 650-8670 (JP); FUJIMURA, Ryohei, Hyogo 650-8670 (JP); TANAKA, Kazuo, Hyogo 650-8670 (JP); KOUZAKI, Daisuke, Hyogo 650-8670 (JP); NAKADO, Hiroki, Hyogo 650-8670 (JP); MURAGISHI, Osamu, Hyogo 650-8670 (JP); SAKANO, Yoshinobu, Hyogo 650-8670 (JP)
(74) Representative: Dehns
(86) International application number: PCT/JP2019/015228
(87) International publication number: WO 2020/202579

(56) References cited:
- WO-A1-2014/132661
- WO-A1-2017/108756
- WO-A1-2017/199735
- CN-A- 104 100 832
- CN-A- 104 100 832
- JP-A- 2004 028 238
- JP-A- 2005 029 087
- JP-A- 2015 013 494
- JP-A- 2015 013 494
- JP-A- 2017 207 085
- JP-A- 2017 512 156
- JP-A- H07 217 796
- JP-A- H08 142 976
- JP-A- H11 278 584
- JP-A- H11 278 584
- US-A- 3 968 764

## Description

### Technical Field

The present invention relates to a liquefied gas tank and a liquefied gas carrier ship including the liquefied gas tank.

### Background Art

Liquefied gas tanks for liquefied gases such as LNG and liquefied hydrogen have been conventionally known. For example, Patent Literature 1 discloses a liquefied gas tank including a spherical tank body storing liquefied hydrogen and an insulating layer entirely covering the outer surface of the tank body.

JP H11 278584 A discloses a double shell storage tank comprising an outer tank and an inner tank separated by a cold insulation layer.

WO 2014/132661 A1 discloses a heat insulating container for holding a low temperature material such as liquified natural gas or hydrogen gas.

### Citation List

### Patent Literature

PTL 1: Japanese Laid-Open Patent Application Publication (Translation of PCT Application) No. 2019-501064

### Summary of Invention

### Technical Problem

Patent Literature 1 describes filling the insulating layer covering the outer surface of the tank body with hydrogen vapor. However, Patent Literature 1 fails to describe any specific structure for accomplishing the filling of the insulating layer with hydrogen vapor.

It is therefore an object of the present invention to provide a liquefied gas tank having a feasible structure and a liquefied gas carrier ship including the liquefied gas tank.

### Solution to Problem

In order to solve the above problem, a liquefied gas tank according to one aspect of the present invention includes: a spherical tank body storing a liquefied gas; a heat insulator covering an outer surface of the tank body; and a membrane that has a thickness equal to or smaller than 1/10 of a thickness of the tank body and cannot support itself, the membrane hermetically covering the heat insulator along the outer surface of the tank body, and being fixed to the heat insulator or the tank body, with the heat insulator held between the membrane and the tank body.

In the above configuration, the heat insulator is hermetically covered by the membrane, and this makes it possible to fill the space between the tank body and the membrane with a gas other than air or decrease the pressure in the space below the atmospheric pressure. That is, the liquefied gas tank configured as described above has a feasible structure.

For example, both upper and lower hemispherical portions of the membrane may be fixed to the heat insulator or the tank body.

The liquefied gas tank may further include a tubular skirt supporting the tank body on a floor surface of a hull, and the skirt may include an upper portion made of the same material as the tank body, a lower portion made of the same material as the hull, and a middle portion made of a material having a lower heat conductivity than the materials of the tank body and the hull. In this configuration, the skirt can easily be joined to the tank body and the hull, and heat transfer through the skirt can be hindered by the middle portion of the skirt.

The membrane may include an inner curved portion located inside the skirt and an outer curved portion located outside the skirt, and each of the inner and outer curved portions may be made of the same material as the middle portion of the skirt and joined to the middle portion of the skirt. In this configuration, upon introduction of the liquefied gas into the tank body, each of the inner and outer curved portions thermally shrinks such that the curved portion sticks to the heat insulator, with a ring-shaped junction with the skirt serving as a base point of sticking.

A pressure in a space provided by the heat insulator between the tank body and the membrane may be lower than an atmospheric pressure. In this configuration, the membrane is pressed against the tank body by the atmospheric pressure via the heat insulator. Thus, the structure for fixing the membrane can be simplified.

Alternatively, a space provided by the heat insulator between the tank body and the membrane may be filled with a boil-off gas generated by evaporation of the liquefied gas.

### Advantageous Effects of Invention

The present invention provides a liquefied gas tank having a feasible structure.

### Brief Description of Drawings

FIG 1 is a cross-sectional view of a liquefied gas carrier ship including a liquefied gas tank according to a first embodiment of the present invention.
FIG 2 is an enlarged view of a key part shown in FIG 1.
FIG 3 is a cross-sectional view of an exemplary liquefied gas carrier ship including a liquefied gas tank.
FIG 4 is a cross-sectional view of an exemplary liquefied gas carrier ship including a liquefied gas tank according to a modification of the exemplary liquified gas carrier ship of FIG 3.

### Description of Embodiments

### (First embodiment)

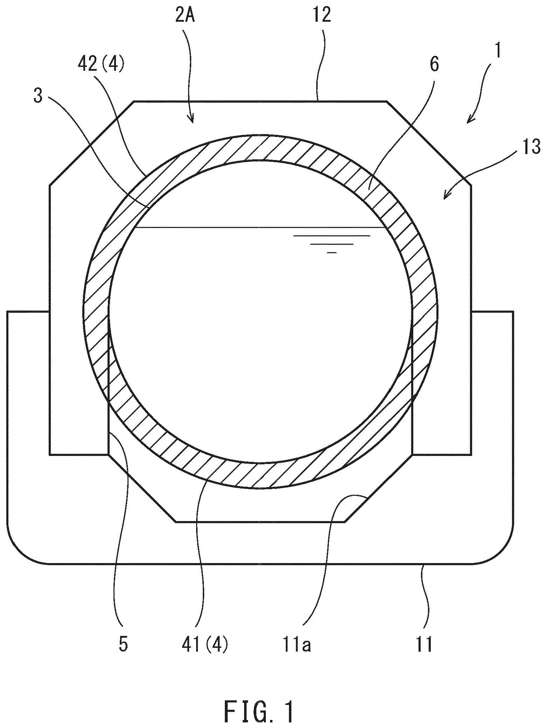

FIG 1 shows a liquefied gas carrier ship 1 including a liquefied gas tank 2A according to a first embodiment of the present invention. The liquefied gas carrier ship 1 includes, in addition to the liquefied gas tank 2A, a hull 11 on which the liquefied gas tank 2A is mounted and a tank cover 12 forming a holding space 13 around the liquefied gas tank 2A together with the hull 11.

In the present embodiment, the holding space 13 is filled with nitrogen gas. The holding space 13 may be filled with dry air or exhaust gas of an engine for propulsion.

The liquefied gas tank 2Aincludes a tank body 3 storing a liquefied gas, a heat insulator 6 entirely covering the outer surface of the tank body 3, and a membrane 4 entirely covering the heat insulator 6. For example, the liquefied gas is LNG, liquefied nitrogen, liquefied hydrogen, or liquefied helium.

The tank body 3 is spherical. The tank body 3 need not be spherically symmetric and may have a shape close to a spherically symmetric shape. For example, the tank body 3 may have a shape differing from a spherically symmetric shape in that the tank body 3 bulges upward and/or downward in the direction of 45 degrees with respect to the center of the tank body 3. Alternatively, the tank body 3 may have a shape with a short tubular element interposed between the upper and lower hemispheres.

The tank body 3 is supported by a skirt 5 on a floor surface 11a of the hull 11. The skirt 5 is a tubular skirt having an axis extending in the vertical direction, and the upper end of the skirt 5 is joined to an equatorial portion of the tank body 3 by means such as welding. The structure for supporting the tank body 3 may be changed as appropriate.

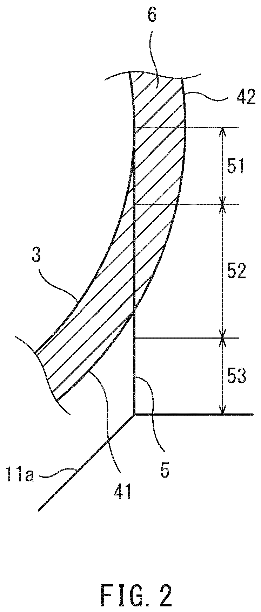

As shown in FIG 2, the skirt 5 includes an upper portion 51, a middle portion 52, and a lower portion 53. In the example shown, the upper and lower portions 51 and 53 are shorter than the middle portion 52. However, the lengths of these portions may be changed as appropriate.

The upper portion 51 is made of the same material as the tank body 3 (an example of the material is aluminum), and the lower portion 53 is made of the same material as the hull 11 (an example of the material is carbon steel). The middle portion 52 is made of a material having a lower heat conductivity than the materials of the tank body 3 and hull 11 (an example of the material of the middle portion 52 is stainless steel). Although not shown, joints for dissimilar materials are disposed between the upper and middle portions 51 and 52 and between the middle and lower portions 52 and 53.

In the present embodiment, the heat insulator 6 is composed of foamed materials arranged adjacent to one another, each of the foamed materials being shaped as a panel. The foamed materials are made of a resin such as polyurethane (PU) or phenolic resin (PF).

The membrane 4 hermetically covers the heat insulator 6 along the outer surface of the tank body 3. That is, the shape of the membrane 4 is similar to the shape of the tank body 3. The membrane 4 is significantly thinner than the tank body 3, and thus cannot support itself unlike the tank body 3. The thickness of the membrane 4 is equal to or smaller than 1/10 of the thickness of the tank body 3. For example, the thickness of the tank body 3 is from 10 to 80 mm, and the thickness of the membrane 4 is from 1 to 10 mm.

For example, the membrane 4 may be made of invar alloy having an extremely low linear expansion coefficient or may be made of stainless steel. The membrane 4 is desirably pleated to absorb the differential thermal shrinkage that the tank body 3 and membrane 4 undergo upon introduction of the liquefied gas into the tank body 3.

The membrane 4 is fixed to the heat insulator 6 or the tank body 3, with the heat insulator 6 held between the tank body 3 and the membrane 4. Both the upper and lower hemispherical portions of the membrane 4 are desirably fixed to the heat insulator 6 or the tank body 3. However, only the lower hemispherical portion of the membrane 4 may be fixed to the heat insulator 6 or the tank body 3.

For example, the membrane 4 may be fixed to the heat insulator 6 during production of the foamed materials composing the heat insulator 6, and this fixing may be accomplished by self-adhesion occurring due to foaming of the resin. For example, in the case where the heat insulator 6 has a layered structure including a wire net held between the lower and upper foamed material layers, the wire net may be fixed using stud bolts disposed on the outer surface of the tank body 3, and the wire net and the membrane 4 may be coupled by bolts. Alternatively, the membrane 4 may be fixed directly to the tank body 3 using stud bolts having a length greater than the thickness of the heat insulator 6.

The membrane 4 includes an inner curved portion 41 located inside the skirt 5 and an outer curved portion 42 located outside the skirt 5. Each of the inner and outer curved portions 41 and 42 is made of the same material as the middle portion 52 of the skirt 5 (an example of the material is stainless steel). Each of the inner and outer curved portions 41 and 42 is joined to the middle portion 52 of the skirt 5 by means such as welding.

In the present embodiment, the space provided by the heat insulator 6 between the tank body 3 and the membrane 4 is filled with nitrogen gas. The space between the tank body 3 and the membrane 4 may be filled with hydrogen gas or helium gas.

The pressure in the space between the tank body 3 and the membrane 4 is lower than the atmospheric pressure. For example, the pressure in the space between the tank body 3 and the membrane 4 is from 1.0 × 10⁻⁵ to 5.0 × 10⁴ Pa.

One way of creating a negative-pressure nitrogen gas environment between the tank body 3 and the membrane 4 as in the present embodiment may be to first suck in air present between the tank body 3 and the membrane 4 by a vacuum pump after production of the tank body 3 and membrane 4, then inject nitrogen gas into the space between the tank body 3 and the membrane 4, and finally suck in the nitrogen gas by a vacuum pump.

In the liquefied gas tank 2A of the present embodiment, as described above, the heat insulator 6 is hermetically covered by the membrane 4, and this makes it possible to fill the space between the tank body 3 and the membrane 4 with a gas other than air or decrease the pressure in the space below the atmospheric pressure. That is, the liquefied gas tank 2A of the present embodiment has a feasible structure.

In the case where the pressure in the space between the tank body 3 and the membrane 4 is equal to the atmospheric pressure, a large number of stud bolts for fixing are needed to allow the entire membrane 4 to adhere closely to the heat insulator 6.

In contrast, in the present embodiment, where the pressure in the space between the tank body 3 and the membrane 4 is lower than the atmospheric pressure, the membrane 4 is pressed against the tank body 3 by the atmospheric pressure via the heat insulator 6. Thus, the structure for fixing the membrane 4 can be simplified, for example, by reducing the number of the stud bolts for fixing. This allows for a reduction in the number of heat penetration routes leading to the tank body 3, resulting in improved heat insulation performance.

Further, in the present embodiment, the upper and lower portions 51 and 53 of the skirt 5 are made of the same materials as the tank body 3 and hull 11, respectively. Thus, the skirt 5 can easily be joined to the tank body 3 and hull 11. Moreover, since the middle portion 52 of the skirt 5 has a lower heat conductivity than the upper and lower portions 51 and 53, heat transfer through the skirt 5 can be hindered by the middle portion 52.

Additionally, in the present embodiment, the inner and outer curved portions 41 and 42 of the membrane 4 are made of the same material as the middle portion 52 of the skirt 5 and joined to the middle portion 52. Thus, upon introduction of the liquefied gas into the tank body 3, each of the inner and outer curved portions 41 and 42 thermally shrinks such that the curved portion 41 or 42 sticks to the heat insulator 6, with a ring-shaped junction with the skirt 5 serving as a base point of sticking.

### <Modification>

The space between the tank body 3 and the membrane 4 may be filled with a boil-off gas generated by evaporation of the liquefied gas stored in the tank body 3. Various methods can be used to fill the space between the tank body 3 and the membrane 4 with the boil-off gas. For example, an upper portion of the tank body 3 may be provided with a communication hole. Alternatively, although not shown, a delivery pipe through which the boil-off gas is delivered from the tank body 3 to another device may be provided with a branch pipe, and the distal end of the branch pipe may open into the space between the tank body 3 and the membrane 4.

### (Exemplary disclosure)

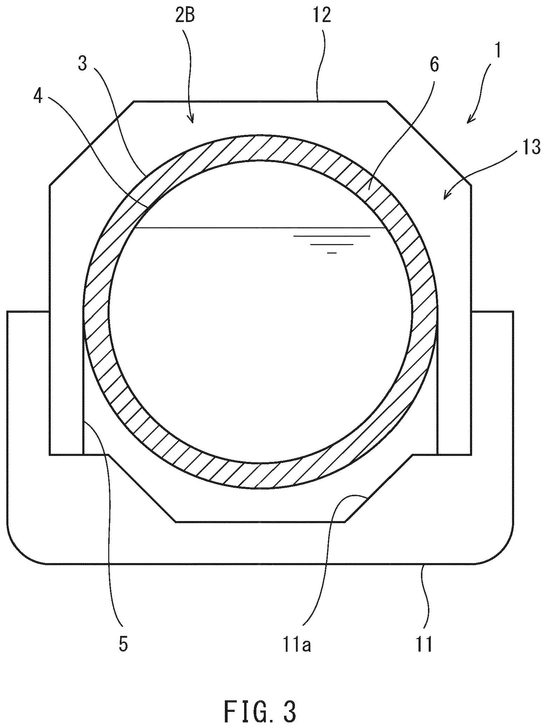

FIG 3 shows the liquefied gas carrier ship 1 including a liquefied gas tank 2B. Elements which are the same as those of the first embodiment are denoted by the same reference signs, and the descriptions given above for these elements are omitted.

In the present example, the heat insulator 6 entirely covers the inner surface, rather than the outer surface, of the tank body 3, and the membrane 4 covers the heat insulator 6 entirely and hermetically along the inner surface of the tank body 3. The liquefied gas is stored inside the membrane 4.

The membrane 4 is fixed to the heat insulator 6 or the tank body 3, with the heat insulator 6 held between the tank body 3 and the membrane 4. Both the upper and lower hemispherical portions of the membrane 4 are desirably fixed to the heat insulator 6 or the tank body 3. However, only the upper hemispherical portion of the membrane 4 may be fixed to the heat insulator 6 or the tank body 3.

For example, the membrane 4 may be fixed to the heat insulator 6 during production of the foamed materials composing the heat insulator 6, and this fixing may be accomplished by self-adhesion occurring due to foaming of the resin. For example, in the case where the heat insulator 6 has a layered structure including a wire net held between the lower and upper foamed material layers, the wire net may be fixed using stud bolts disposed on the inner surface of the tank body 3, and the wire net and the membrane 4 may be coupled by bolts. Alternatively, the membrane 4 may be fixed directly to the tank body 3 using stud bolts having a length greater than the thickness of the heat insulator 6.

In the present example, the space provided by the heat insulator 6 between the tank body 3 and the membrane 4 is filled with a boil-off gas generated by evaporation of the liquefied gas stored in the membrane 4. Various methods can be used to fill the space between the tank body 3 and the membrane 4 with the boil-off gas. For example, an upper portion of the membrane 4 may be provided with a communication hole. Alternatively, although not shown, a delivery pipe through which the boil-off gas is delivered from inside the membrane 4 to another device may be provided with a branch pipe, and the distal end of the branch pipe may open into the space between the tank body 3 and the membrane 4.

In the liquefied gas tank 2B of the present example, as in the liquefied gas tank 2A of the first embodiment, the heat insulator 6 is hermetically covered by the membrane 4, and this makes it possible to fill the space between the tank body 3 and the membrane 4 with a gas other than air or decrease the pressure in the space below the ambient pressure. That is, the liquefied gas tank 2B of the present example has a feasible structure.

### <Modification>

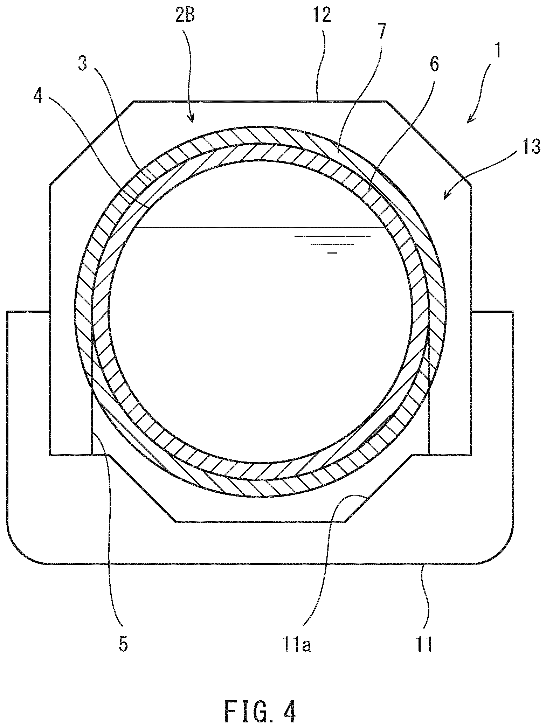

As shown in FIG 4, the outer surface of the tank body 3 may be covered by a heat insulator 7. When the outer surface of the tank body 3 is bare as shown in FIG 3, the heat insulation performance needs to be ensured by increasing the distance from the membrane 4 to the tank body 3. In contrast, when the outer surface of the tank body 3 is covered by the heat insulator 7 as shown in FIG 4, the distance from the membrane 4 to the tank body 3 and hence the diameter of the tank body 3 can be smaller than when the outer surface of the tank body 3 is not covered by the heat insulator 7.

In the case where the heat insulator 7 is a foamed material, since the holding space 13 located outside the heat insulator 7 is filled with nitrogen gas, the nitrogen gas enters the heat insulator 7 from the holding space 13, and the internal pores of the heat insulator 7 are filled with the nitrogen gas. Nitrogen gas may be fed to the second heat insulator 7 from a gas generator (not shown). In the case where the holding space 13 is filled with dry air rather than nitrogen gas, the internal pores of the heat insulator 7 may also be filled with dry air.

### (Other embodiments)

The present invention is not limited to the embodiments described above, and various modifications can be made without departing from the scope of the claimed invention.

For example, the liquefied gas tanks 2A and 2B need not be included in the liquefied gas carrier ship 1, and may be included in onshore facilities.

### Reference Signs List

- 1: liquefied gas carrier ship
- 2A, 2B: liquefied gas tank
- 3: tank body
- 4: membrane
- 41: inner curved portion
- 42: outer curved portion
- 5: skirt
- 51: upper portion
- 52: middle portion
- 53: lower portion
- 6, 7: heat insulator

## Claims

1. A liquefied gas tank (2A) comprising:
a spherical tank body (3) storing a liquefied gas; and
a heat insulator (6) covering an outer surface of the tank body (3);
**characterized by**:
a membrane (4) that has a thickness equal to or smaller than 1/10 of a thickness of the tank body (3) and cannot support itself, the membrane (4) hermetically covering the heat insulator (6) along the outer surface of the tank body (3), and being fixed to the heat insulator (6) or the tank body (3), with the heat insulator (6) held between the membrane (4) and the tank body (3).

2. The liquefied gas tank (2A) according to claim 1, wherein both upper and lower hemispherical portions of the membrane (4) are fixed to the heat insulator (6) or the tank body (3).

3. The liquefied gas tank (2A) according to claim 1 or 2, further comprising a tubular skirt (5) supporting the tank body (3) on a floor surface (11a) of a hull (11), wherein
the skirt (5) includes an upper portion (51) made of the same material as the tank body (3), a lower portion (53) made of the same material as the hull (11), and a middle portion (52) made of a material having a lower heat conductivity than the materials of the tank body (3) and the hull (11).

4. The liquefied gas tank (2A) according to claim 3, wherein
the membrane (4) includes an inner curved portion (41) located inside the skirt (5) and an outer curved portion (42) located outside the skirt (5), and
each of the inner and outer curved portions (41, 42) is made of the same material as the middle portion (52) of the skirt and joined to the middle portion (52) of the skirt.

5. The liquefied gas tank (2A) according to any one of claims 1 to 4, wherein a pressure in a space provided by the heat insulator (6) between the tank body (3) and the membrane (4) is lower than an atmospheric pressure.

6. The liquefied gas tank (2A) according to any one of claims 1 to 4, wherein a space provided by the heat insulator (6) between the tank body (3) and the membrane (4) is filled with a boil-off gas generated by evaporation of the liquefied gas.

## Patentansprüche

1. Tank (2A) für verflüssigtes Gas, umfassend:
einen kugelförmigen Tankkörper (3), der ein verflüssigtes Gas speichert; und
einen Wärmeisolator (6), der eine Außenfläche des Tankkörpers (3) abdeckt;
**gekennzeichnet durch**:
eine Membran (4), die eine Dicke aufweist, die gleich oder kleiner als 1/10 einer Dicke des Tankkörpers (3) ist, und sich nicht selbst stützen kann, wobei die Membran (4) den Wärmeisolator (6) entlang der Außenfläche des Tankkörpers (3) hermetisch abdeckt und an dem Wärmeisolator (6) oder dem Tankkörper (3) befestigt ist, wobei der Wärmeisolator (6) zwischen der Membran (4) und dem Tankkörper (3) gehalten ist.

2. Tank (2A) für verflüssigtes Gas nach Anspruch 1, wobei sowohl obere als auch untere halbkugelförmige Abschnitte der Membran (4) an dem Wärmeisolator (6) oder dem Tankkörper (3) befestigt sind.

3. Tank (2A) für verflüssigtes Gas nach Anspruch 1 oder 2, weiter umfassend eine rohrförmige Schürze (5), die den Tankkörper (3) auf einer Bodenfläche (11a) eines Rumpfes (11) stützt, wobei
die Schürze (5) einen oberen Abschnitt (51), der aus demselben Material wie der Tankkörper (3) hergestellt ist, einen unteren Abschnitt (53), der aus demselben Material wie der Rumpf (11) hergestellt ist, und einen mittleren Abschnitt (52), der aus einem Material hergestellt ist, das eine geringere Wärmeleitfähigkeit als die Materialien des Tankkörpers (3) und des Rumpfs (11) aufweist, einschließt.

4. Tank (2A) für verflüssigtes Gas nach Anspruch 3, wobei
die Membran (4) einen inneren gekrümmten Abschnitt (41), der sich innerhalb der Schürze (5) befindet, und einen äußeren gekrümmten Abschnitt (42), der sich außerhalb der Schürze (5) befindet, einschließt, und
jeder des inneren und des äußeren gekrümmten Abschnitts (41, 42) aus demselben Material wie der mittlere Abschnitt (52) der Schürze hergestellt ist und mit dem mittleren Abschnitt (52) der Schürze zusammengefügt ist.

5. Tank (2A) für verflüssigtes Gas nach einem der Ansprüche 1 bis 4, wobei ein Druck in einem durch den Wärmeisolator (6) zwischen dem Tankkörper (3) und der Membran (4) bereitgestellten Raum geringer als ein Atmosphärendruck ist.

6. Tank (2A) für verflüssigtes Gas nach einem der Ansprüche 1 bis 4, wobei ein durch den Wärmeisolator (6) zwischen dem Tankkörper (3) und der Membran (4) bereitgestellter Raum mit einem durch Verdampfung des verflüssigten Gases erzeugten Boil-off-Gas gefüllt ist.

## Revendications

1. Réservoir de gaz liquéfié (2A) comprenant :
un corps de réservoir (3) sphérique stockant un gaz liquéfié ; et
un isolant thermique (6) recouvrant une surface externe du corps de réservoir (3) ;
**caractérisé par** :
une membrane (4) présentant une épaisseur égale ou plus petite que 1/10 d'une épaisseur du corps de réservoir (3) et ne pouvant se soutenir seule, la membrane (4) recouvrant hermétiquement l'isolant thermique (6) le long de la surface externe du corps de réservoir (3), et étant fixée à l'isolant thermique (6) ou au corps de réservoir (3), l'isolant thermique (6) étant maintenu entre la membrane (4) et le corps de réservoir (3).

2. Réservoir de gaz liquéfié (2A) selon la revendication 1, dans lequel les portions hémisphériques supérieure et inférieure de la membrane (4) sont fixées à l'isolant thermique (6) ou au corps de réservoir (3).

3. Réservoir de gaz liquéfié (2A) selon la revendication 1 ou la revendication 2, comprenant en outre une jupe (5) tubulaire supportant le corps de réservoir (3) sur une surface de plancher (11a) d'une coque (11), dans lequel la jupe (5) inclut une portion supérieure (51) réalisée dans le même matériau que le corps de réservoir (3), une portion inférieure (53) réalisée dans le même matériau que la coque (11), et une portion centrale (52) réalisée dans un matériau présentant une conductivité thermique inférieure aux matériaux du corps de réservoir (3) et de la coque (11).

4. Réservoir de gaz liquéfié (2A) selon la revendication 3, dans lequel
la membrane (4) inclut une portion courbe interne (41) située à l'intérieur de la jupe (5) et une portion courbe externe (42) située à l'extérieur de la jupe (5), et
chacune des portions incurvées interne et externe (41, 42) est réalisée dans le même matériau que la portion centrale (52) de la jupe et jointe à la portion centrale (52) de la jupe.

5. Réservoir de gaz liquéfié (2A) selon la revendication 1 à 4, dans lequel une pression dans un espace muni de l'isolant thermique (6) entre le corps de réservoir (3) et la membrane (4) est inférieure à une pression atmosphérique.

6. Réservoir de gaz liquéfié (2A) selon la revendication 1 à 4, dans lequel un espace muni de l'isolant thermique (6) entre le corps de réservoir (3) et la membrane (4) est rempli d'un gaz d'évaporation généré par évaporation du gaz liquéfié.
